# EUROPÄISCHE PATENTSCHRIFT

(11) **EP 1 613 461 B1**
(45) Veröffentlichungstag und Bekanntmachung des Hinweises auf die Patenterteilung: **18.02.2015**
(21) Anmeldenummer: 04704603.2
(22) Anmeldetag: 23.01.2004
(51) Int. Cl.: B29C 49/56, B29C 33/22

(54) **FORMVORRICHTUNG**
MOULDING DEVICE
ENSEMBLE MOULE

(30) Priorität: 17.04.2003 DE 10317711
(43) Veröffentlichungstag der Anmeldung: 11.01.2006
(73) Patentinhaber: Hansen, Bernd, 74429 Sulzbach-Laufen (DE)
(72) Erfinder: Hansen, Bernd, 74429 Sulzbach-Laufen (DE)
(74) Vertreter: Bartels, Martin Erich Arthur
(86) Internationale Anmeldenummer: PCT/EP2004/000531
(87) Internationale Veröffentlichungsnummer: WO 2004/091892

(56) Entgegenhaltungen:
- US-A- 3 877 861
- US-A- 3 883 286

## Beschreibung

Im Stand der Technik (DE 199 26 329 A1) sind Verfahren und Formvorrichtungen zum Herstellen von Behältern bekannt, bei denen ein Schlauch plastifizierten Kunststoffmaterials in eine Formeinrichtung hinein extrudiert wird, das eine Ende des Schlauches durch Verschweißen verschlossen wird und durch Erzeugen eines am Schlauch wirksamen pneumatischen Druckgradienten dieser aufgeweitet und zur Bildung des Behälters an die formgebende Wand der Formeinrichtung, bestehend aus zwei gegenüberliegenden Formwerkzeugen, angelegt wird. Über einen entsprechenden Fülldorn wird dann der Kunststoffbehälter steril innerhalb der Formeinrichtung befüllt und nach Entnahme des Fülldornes anschließend hermetisch unter Bildung einer vorgebbaren Kopfgeometrie verschlossen, wobei für die Bildung des eigentlichen Kunststoffbehälters, in dem später das Fluid bevorratet ist, zwei Behälterformgebungsbacken mittels hydraulischer Antriebsmittel für den Erhalt einer Schließstellung aufeinander zu und in eine ihrer Öffnungsstellungen voneinander gegenläufig weg bewegbar sind.

Die mittels der beiden getrennt ansteuerbaren Kopfbacken zu erzeugenden Kopfgeometrien umfassen dabei regelmäßig auch das Halsteil des Kunststoffbehälters - auch in Form von Ampullen -, das über eine Trennstelle von einem Kopfstück verschlossen für einen Fluid-Entnahmevorgang öffenbar ist, sobald das Kopfstück über einen an ihm angeformten Knebelteil über die Trennstelle abgetrennt und dergestalt vom eigentlichen Kunststoffbehälter entfernt wird.

Dahingehende Verfahren sind in einer Vielzahl von Ausführungsformen bekannt und finden verbreitet Anwendung bei Verpackungssystemen für flüssige oder pastöse Produkte, beispielsweise im Rahmen des bekannten bottelpack^{®}- Systems.

Die in der Praxis regelmäßig zum Einsatz kommenden hydraulischen Antriebssysteme für die jeweilige Zustellbewegung des Formwerkzeuges werfen insoweit Probleme auf, als etwaige Leckagen zu Verschmutzungen mit dem Fluid führen können, was insbesondere beim Einsatz der formgebenden Maschinen für Kunststoffbehälter in der Pharmazeutik und im Lebensmittelbereich sowie allgemein in der Medizintechnik zu Problemen führt. Auch ist der Wartungsaufwand erhöht und häufig erreichen die hydraulischen Antriebssysteme nicht die für eine Massenproduktion gewünschten Taktzeiten oder hohe Taktzeiten gehen zu Lasten einer genauen Positionierung der Formwerkzeuge für die Behälterformgebung.

So zeigt die US 3 883 286 A, gemäß dem Oberbegriff des Anspruchs 1, eine gattungsgemäße Formvorrichtung zum Bewegen mindestens eines Formwerkzeuges, insbesondere zum Erzeugen von Behältergeometrien bei Kunststoffbehältern, mittels einer Kulissensteuerung, die das jeweilige Formwerkzeug zumindest für das Schließen der Form in eine Schließstellung bringt, wobei die Kulissensteuerung von einem Antrieb betätigbar ist, die eine Schlitzführung aufweist, die sich außenumfangsseitig an einem mit dem Antrieb antreibbaren Rotationskörper befindet und in die ein Betätigungsglied eingreift, das mit einem Schlittenteil zusammenwirkt, und wobei bei Rotation der Schlitzführung von ihrem einen Endbereich zu ihrem anderen Endbereich und umgekehrt das zuordenbare Schlittenteil mit dem Formwerkzeug über das derart längsverfahrbare Betätigungsglied von einer Schließstellung in eine Öffnungsstellung der aus dem jeweiligen Formwerkzeug gebildeten Form und umgekehrt verfahrbar ist. Eine vergleichbar aufgebaute Formvorrichtung ist auch durch die US 3 877 861 A bekannt.

Ausgehend von diesem Stand der Technik liegt der Erfindung die Aufgabe zugrunde, eine Formvorrichtung zum Bewegen mindestens eines Formwerkzeuges zu schaffen, die es erlaubt, moderne Antriebskonzepte zum Einsatz zu bringen, beispielsweise in Form elektrischer oder pneumatischer Antriebe, deren Wartungsaufwand reduziert ist und die insbesondere große Ausstoßraten an dem zu produzierenden Gut, wie Kunststoffbehältern, erlauben bei gleichzeitig hoher Positioniergenauigkeit für die Formwerkzeuge. Eine dahingehende Aufgabe löst eine Formvorrichtung mit den Merkmalen des Patentanspruches 1 in seiner Gesamtheit.

Dadurch, dass gemäß dem kennzeichnenden Teil des Patentanspruches 1 über ein Einstellmittel am Schlittenteil in Form eines Energiespeichers die maximale Schließkraft für mindestens eines der Formwerkzeuge vorgebbar ist, läßt sich unabhängig von der aufgebrachten Schließkraft der Kulissensteuerung diese über das Einstellmittel sinnfällig begrenzen und dergestalt die Formgebungssicherheit erhöhen. Als Energiespeicher eignen sich dabei insbesondere Druckfederelemente, beispielsweise in Form von Tellerfedern od. dgl..

Bei der erfindungsgemäßen Formvorrichtung ist zum Bewegen mindestens eines Formwerkzeuges, insbesondere zum Erzeugen von Behältergeometrien bei Kunststoffbehältern, eine Kulissensteuerung vorgesehen, die das jeweilige Formwerkzeug zumindest für das Schließen der Form in eine Schließstellung bringt, wobei die Kulissensteuerung von einem Antrieb betätigbar ist. Aufgrund der Kulissensteuerung ist ein neuartiges Antriebs- und Bewegungskonzept für das jeweilige Formwerkzeug gegeben, das es erlaubt, auf hydraulische Antriebsmittel vollständig zu verzichten, und als Antrieb kommt vorzugsweise ein elektrischer oder ein pneumatischer Antrieb zum Einsatz. Die genannte Kulissensteuerung läßt sich aber auch nach wie vor konventionell noch mittels eines hydraulischen Antriebes betätigen, sofern dies der jeweilige Anwendungsfall geboten erscheinen läßt und hohe Anforderungen an ein steriles Abfüllen bzw. Reinraumqualitäten nicht gefordert sind.

Die erfindungsgemäße Formvorrichtung mit antreibbarer Kulissensteuerung für eine Schließbewegung mit dem Formwerkzeug erlaubt einen gleichförmigen, sicheren und positionsgenauen Antrieb des jeweiligen Formwerkzeuges und benötigt nur einen geringen Wartungsaufwand. Durch die Kulissensteuerung kann in zeitlich dichter Abfolge eine Vielzahl von Öffnungs- und Schließvorgängen vorgenommen werden, was mit der erfindungsgemäßen Formvorrichtung zu einem hohen Ausstoß an zu produzierendem Gut führt, insbesondere in Form von blasgeformten und steril befüllten Kunststoffbehältern.

Die erfindungsgemäße Vorrichtung weist betreffend die Kulissensteuerung eine Schlitzführung auf, die sich außenumfangsseitig an einem mit dem Antrieb antreibbaren Rotationskörper befindet. Vorzugsweise ist dabei ferner vorgesehen, dass in die Schlitzführung ein Betätigungsglied eingreift, das mit einem Schlittenteil zusammenwirkt und dass bei Rotation der Schlitzführung von ihrem einen Endbereich zu ihrem anderen Endbereich und umgekehrt das zuordenbare Schlittenteil mit dem Formwerkzeug über das derart längsverfahrbare Betätigungsglied von einer Schließstellung in eine Öffnungsstellung der aus dem jeweiligen Formwerkzeug gebildeten Form und umgekehrt verfahrbar ist. Hierdurch ist eine sichere und positionsgenaue Führung erreicht bei definiert vorgebbaren Schließkräften über die Kulissensteuerung.

Als besonders kostengünstig bei der Ausführung der Formvorrichtung hat es sich dabei erwiesen, den Rotationskörper zusammen mit dem Antrieb ortsfest an einem Maschinengestell zu lagern, gegenüber dem das Schlittenteil längs seiner Schienenführung vor und zurück bewegbar ist. Aufgrund der genannten Schienenführung wird für das Schlittenteil und insgesamt für die Formvorrichtung eine steife Maschinenauslegung erreicht und Hemmnisse im Betrieb sind derart mit Sicherheit ausgeschlossen.

Bei einer weiteren besonders bevorzugten Ausführungsform der erfindungsgemäßen Formvorrichtung sind paarweise die Formwerkzeuge gegenüberliegend von jeweils einer Kulissensteuerung synchron über ein gemeinsames Antriebsteil bewegbar. Vorzugsweise ist dabei des weiteren vorgesehen, dass über ein von dem Antrieb betätigbares Getriebe und das gemeinsame Antriebsteil mindestens vier Kulissensteuerungen paarweise einander gegenüberliegend antreibbar sind. Hierdurch lassen sich insgesamt vier Formwerkzeuge mit in Reihe hintereinander angeordneten Formgeometrien zum Herstellen mehrerer Behältergeometrien paarweise zusammenwirkend synchron für Formungs- und Entformungsvorgänge ansteuern.

Als Kollisionsschutz ist bei einer bevorzugten Ausführungsform des weiteren vorgesehen, dass eine Überwachungseinrichtung die Position einer Kulissensteuerung überwacht, zumindest bezogen auf die Position des Formwerkzeuges in seiner Schließstellung, vorzugsweise jedoch auch in seiner Öffnungsstellung.

Des weiteren hat es sich bei einer bevorzugten Ausführungsform der erfindungsgemäßen Formvorrichtung für einen hemmnisfreien Betrieb als günstig erwiesen, die Bahngleichung für die Schlitzführung des Rotationskörpers aus einer Sinoide nach Bestehorn auszuführen.

Im folgenden wird die erfindungsgemäße Vorrichtung anhand eines Ausführungsbeispiels nach der Zeichnung näher erläutert. Dabei zeigen in prinzipieller und nicht maßstäblicher Darstellung die
- Fig.1: in Draufsicht die Formvorrichtung in ihrer Gesamtheit;
- Fig.2: einen vergrößerten Ausschnitt aus der Fig.1 bezogen auf deren linken oberen Bildausschnitt;
- Fig.3: die Abwicklung der Bahngeometrie einer an einem Rotationskörper angebrachten Kulissensteuerung mit Schlitzführungen, wie sie bei der Formvorrichtung gemäß den Fig.1 und 2 Anwendung findet.

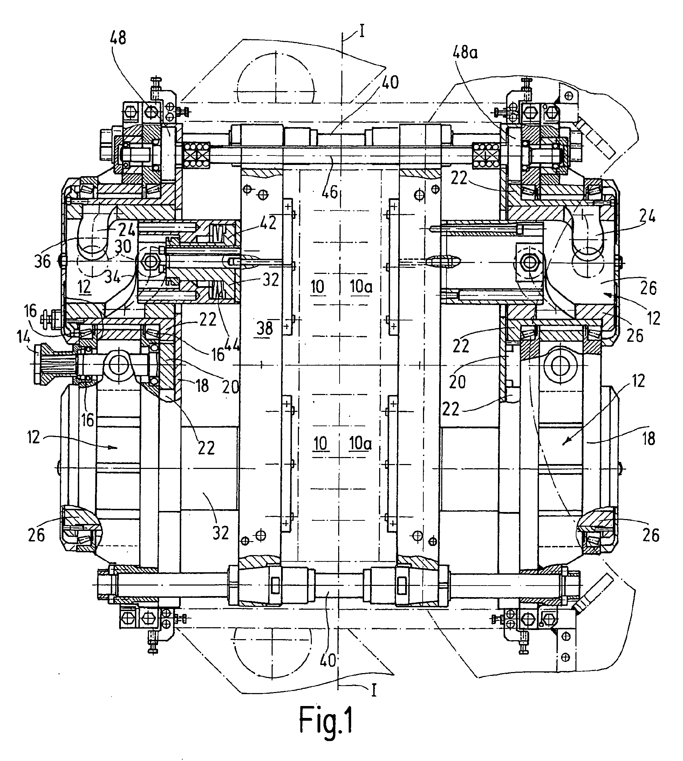

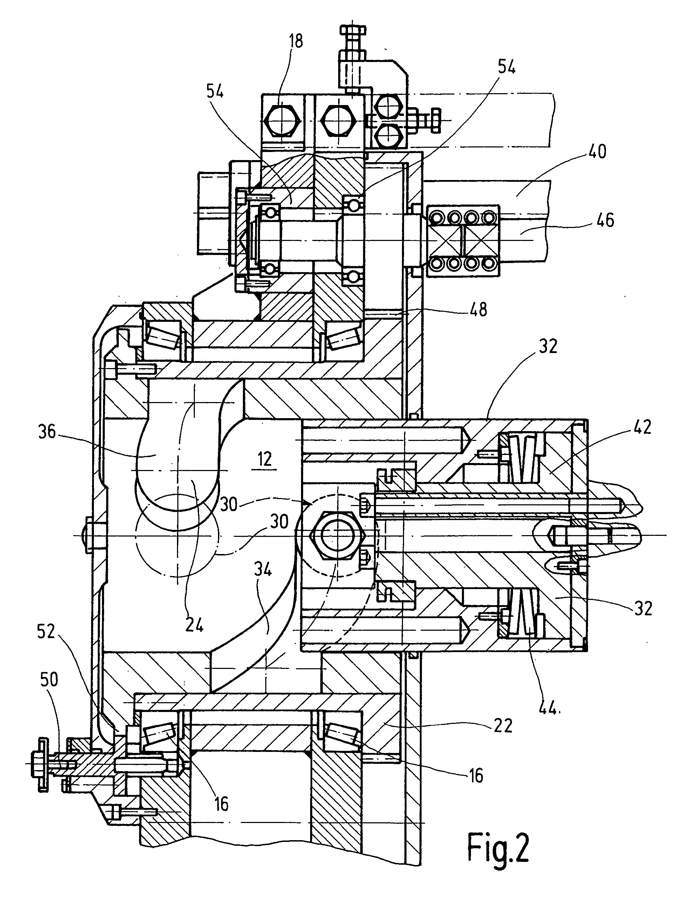

Zunächst wird ein Teil der Gesamt-Formvorrichtung zum Bewegen eines Formwerkzeuges 10 anhand des linken oberen Bildausschnittes gemäß der Darstellung nach der Fig.1 sowie der Fig.2 näher erläutert. An seiner freien Stirnseite weist das Formwerkzeug 10 muldenförmige Ausnehmungen (nicht dargestellt) auf, die dergestalt Formhälften ausbilden zum Erzeugen von Behältergeometrien bei nicht näher dargestellten Kunststoffbehältern - auch in Ampullenform -. Zum Erzeugen der dahingehenden Behältergeometrien arbeitet das Formwerkzeug 10 mit einem korrespondierenden Formwerkzeug 10a mit entsprechend gebildeten Ausnehmungen (nicht dargestellt) zusammen, wobei gemäß der Darstellung nach der Fig.1 sich die beiden Formwerkzeuge 10,10a in der geschlossenen formgebenden Stellung befinden, bei der die freien Stirnseiten der Formwerkzeuge 10,10a längs einer Schließtrennlinie I - I aneinanderstoßen.

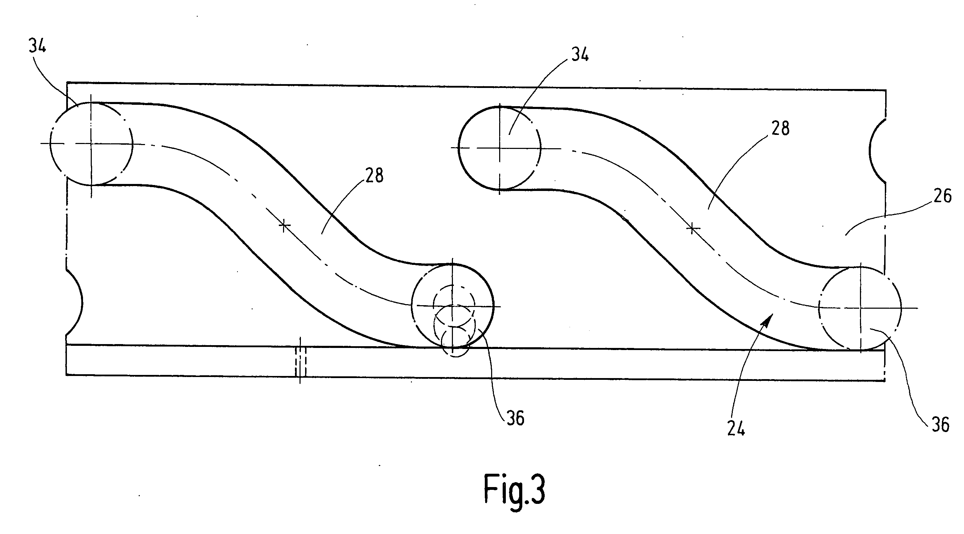

Zum Bewegen des jeweiligen Formwerkzeuges 10,10a dient eine als Ganzes mit 12 bezeichnete Kulissensteuerung, die mittels eines zentral angeordneten Antriebes 14 antreibbar ist, wobei in der Fig.1 von dem Antrieb 14 der Einfachheit halber nur die Keilwelle dargestellt ist, die mit der Abtriebswelle eines Elektromotors kuppelbar, beispielsweise in Form eines elektrischen Schrittmotors, dergestalt den Antrieb für die Kulissensteuerung 12 erlaubt. Hierfür ist die Keilwelle 14 drehbar über Lagerstellen 16 in einem Maschinengestell 18 drehbar gelagert und weist an ihrer einen freien, dem Formwerkzeug 10 zugewandten Seite ein Antriebszahnrad 20 auf. Das dahingehende Antriebszahnrad 20 kämmt mit einem Abtriebszahnrad 22 der Kulissensteuerung 12. Die Kulissensteuerung 12 weist eine Schlitzführung 24 auf, die sich außenumfangsseitig an einem mit dem Antrieb 14 antreibbaren und im wesentlichen zylindrisch ausgebildeten Rotationskörper 26 befindet. Die jeweilige Schlitzführung 24 weist zwei Bahn- oder Kurvensegmente 28 auf, wie sie sich aus der Abwicklung des Rotationskörpers 26 nach der Fig.3 ergeben. Die jeweilige Bahnkurve eines Kurvensegmentes 28 folgt dabei einer Bahngleichung gemäß einer Sinoide nach Bestehorn. Der jeweilige Rotationskörper 26 mit seinen Bahnkurvensegmenten 28 braucht für das Formwerkzeug 10a nicht identisch zu dem Rotationskörper 26 für das Formwerkzeug 10 ausgebildet zu sein. Hier sind gegebenenfalls geringfügige Anpassungen im Hinblick auf den Steuerkurvenverlauf notwendig. Ansonsten entsprechen die Rotationskörper 26 für beide Formhälften 10,10a aber im wesentlichen einander.

In die Schlitzführung 24 mit ihren beiden Bahnkurvensegmenten 28 greift jeweils ein Betätigungsglied 30 in Form einer Kurvenrolle ein. Das jeweilige Betätigungsglied 30 ist drehbar auf gegenüberliegenden Seiten eines Schlittenteils 32 angeordnet, so dass bei Drehung des Rotationskörpers 26 mit seiner Schlitzführung 24 ein gleichmäßiger Vortrieb in Richtung der Schließstellung der Formwerkzeuge 10,10a gewährleistet ist und eine gleichförmige Rückstellbewegung in eine entsprechende Öffnungsstellung, wobei die dahingehende rückwärtige Position mit einem strichlinierten Kreis in der Fig.1 links oben und in der Fig.2 angegeben ist. Bei Rotation der Schlitzführung 24 von ihrem einen Endbereich 34 zum anderen Endbereich 36 eines jeden Bahnkurvensegmentes 28 ist dergestalt das Schlittenteil 32 längsverfahrbar in der einen Bewegungsrichtung und bei umgekehrtem Drehsinn des Rotationskörpers 26 in der anderen Richtung geführt. Der maximal erreichbare Verfahrweg für das Schlittenteil 32 ist mithin durch den axialen Längsabstand zwischen den beiden einander gegenüberliegenden Endbereichen 34,36 zweier verschiedener Bahnkurvensegmente 28 einer Schlitzführung 24 eines Rotationskörpers 26 vorgegeben.

Das Schlittenteil 32 weist an seiner dem Formwerkzeug 10 zugewandten Stirnseite ein Führungsteil 38 auf, an dem das jeweilige Formwerkzeug 10 austauschbar festlegbar ist und randseitig ist das Führungsteil 38 entlang von zwei Schienenführungen 40 axial längsverfahrbar gelagert, wobei die Enden der Schienenführungen 40 im Maschinengestell 18 entsprechend gelagert sind. Des weiteren ist das Führungsteil 38 in einem Verschiebeteil 42 des Schlittenteils in Richtung parallel zu den Schienenführungen 40 längsverfahrbar gehalten, wobei sich das Verschiebeteil 42 an einem Einstellmittel 44 abstützt in Form eines Tellerfederpaketes, das in der Art einer Druckfeder wirkt. Dergestalt läßt sich über das Einstellmittel 44 die maximale Schließkraft für das Formwerkzeug 10 vorgeben, so dass dergestalt ein sicher verlaufender Formgebungsprozeß ermöglicht ist.

In Blickrichtung auf die Fig.1 gesehen ist oben und parallel zur oberen Schienenführung 40 verlaufend ein Antriebsteil 46 angeordnet in Form einer Antriebswelle. An beiden Enden der Antriebswelle 46 ist jeweils mit dieser ein Zahnkranz 48,48a verbunden, so dass bei Bewegen des Rotationskörpers 26 über den Antrieb 14 das Abtriebszahnrad 22 mit dem Zahnrad 48 kämmt und dergestalt die Antriebswelle 46 antreibt, die wiederum über den Zahnkranz 48a an der gegenüberliegenden Seite die Antriebsleistung weitergibt an das nachfolgende Abtriebszahnrad 22 des in der Antriebskette nachfolgenden Rotationskörpers 26. Dergestalt lassen sich paarweise die Formwerkzeuge 10,10a gegenüberliegend von jeweils nur einer Kulissensteuerung 12 mit Antrieb 14 über das gemeinsame Antriebsteil 46 ansteuern und bewegen. Dergestalt erfolgt synchron die Bewegung der Formwerkzeuge 10,10a in ihre Öffnungs- und in Ihre Schließstellung längs der Schließtrennlinie I - I.

Wie die Darstellung nach der Fig.1 des weiteren zeigt, sind mithin über das von dem Antrieb 14 betätigbare Getriebe, bestehend aus den Zahnrädern 20,22 und 48 sowie 48a, insgesamt vier Kulissensteuerungen 12 paarweise einander gegenüberliegend mit einer sinnfälligen Antriebsrichtung für eine Vor- und Rückfahrbewegung der Schlittenteile 32 der Formvorrichtung ansteuerbar. Der dahingehende Antrieb ist sehr genau und läßt eine exakte Positionierung des jeweiligen Formwerkzeuges 10,10a für einen Formgebungsvorgang zu. Des weiteren können auf einer Seite die in einer Linie gegenüberliegenden Formwerkzeuge 10 miteinander verbunden, aber auch von einander separiert sein, wobei Entsprechendes für die gegenüberliegend angeordneten Formwerkzeuge 10a gilt.

Wie sich des weiteren aus der Fig.2 ergibt, ist eine Überwachungseinrichtung 50 vorgesehen, die federkraftbelastet aus ihrer in der Fig.2 dargestellten Verriegelungsposition in eine Freigabestellung längsverschiebbar ist, wobei die dahingehende Überwachungseinrichtung 50 vorzugsweise von außen über einen Stellgeber, insbesondere in Form eines Pneumatikzylinders od. dgl., betätigbar ist. Entsprechend weist der Rotationskörper 26 außenumfangsseitig eine erste Ausnehmung 52 auf, die ihre Entsprechung durch die Schließstellung der Formwerkzeuge 10,10a hat. Kommt es in dieser Schließstellung zu einer Verrastung; greifen also Teile der Überwachungseinrichtung 50 in die zugeordnete Ausnehmung 52 im Rotationskörper 26 ein, ist sichergestellt, dass eine Schließstellung längs der Schließtrennlinie I - I durch die Formwerkzeuge 10,10a eingenommen ist und die Maschinensteuerung erkennt dann, dass dergestalt ein sicherer Formgebungsvorgang möglich ist. Wird aufgrund eines Fehlers die dahingehende Position nicht eingenommen, stellt dies die Überwachungseinrichtung 50 fest und der Formvorgang könnte dann angehalten werden, ohne dass es zu Beschädigungen an der Formvorrichtung kommt. Durch eine diametral der Ausnehmung 52 gegenüberliegende Ausnehmung (nicht dargestellt) läßt sich entsprechend über die Überwachungseinrichtung 50 der rückgestellte Öffnungsstellungsbereich für die Formwerkzeuge 10,10a gleichfalls mit überwachen. Des weiteren ist die Antriebswelle 46 endseitig über weitere Lagerstellen 54 im Maschinengestell 18 drehbar gelagert.

Mit der beschriebenen Anordnung einer Formvorrichtung lassen sich sehr hohe Taktzeiten für herzustellende Formbehälter aus Kunststoffmaterial erreichen bei gleichzeitig sehr hoher Bearbeitungsqualität im Hinblick auf die vorgebbare Positioniergenauigkeit der Formwerkzeuge 10,10a, sowohl bezogen auf ihre Schließstellung als auch beim Auseinanderfahren in ihre Öffnungsstellung für die Herstellform. Die Formvorrichtung ist von ihrem Konstruktionsaufbau her sehr steif ausgelegt, so dass eine präzise Ansteuerung der bewegbaren Teile gewährleistet ist, und aufgrund der verwendeten Gleichteile läßt sich die Formvorrichtung kostengünstig realisieren und warten.

## Patentansprüche

1. Formvorrichtung zum Bewegen mindestens eines Formwerkzeuges (10,10a), insbesondere zum Erzeugen von Behältergeometrien bei Kunststoffbehältern, mittels einer Kulissensteuerung (12), die das jeweilige Formwerkzeug (10,10a) zumindest für das Schließen der Form in eine Schließstellung (I - I) bringt, wobei die Kulissensteuerung (12) von einem Antrieb (14) betätigbar ist und wobei die Kulissensteuerung (12) eine Schlitzführung (24) aufweist, die sich außenumfangsseitig an einem mit dem Antrieb (14) antreibbaren Rotationskörper (26) befindet und wobei in die Schlitzführung (24) ein Betätigungsglied (30) eingreift, das mit einem Schlittenteil (32) zusammenwirkt , und wobei bei Rotation der Schlitzführung (24) von ihrem einen Endbereich (34) zu ihrem anderen Endbereich (36) und umgekehrt das zuordenbare Schlittenteil (32) mit dem Formwerkzeug (10,10a) über das derart längsverfahrbare Betätigungsglied (30) von einer Schließstellung in eine Öffnungsstellung der aus dem jeweiligen Formwerkzeug (10,10a) gebildeten Form und umgekehrt verfahrbar ist, **dadurch gekennzeichnet, dass** über ein Einstellmittel (44) am Schlittenteil(32) in Form eines Energiespeichers die maximale Schließkraft für mindestens eines der Formwerkzeuge (10,10a) vorgebbar ist.

2. Formvorrichtung nach Anspruch 1, **dadurch gekennzeichnet, dass** der Rotationskörper (26) zusammen mit dem Antrieb (14) ortsfest an einem Maschinengestell (18) gelagert ist, gegenüber dem das Schlittenteil (32) längs seiner Schienenführung (40) vor und zurück bewegbar ist.

3. Formvorrichtung nach Anspruch 1 oder 2, **dadurch gekennzeichnet, dass** paarweise die Formwerkzeuge (10,10a) gegenüberliegend von jeweils einer Kulissensteuerung (12) synchron über ein gemeinsames Antriebsteil (46) bewegbar sind.

4. Formvorrichtung nach Anspruch 3, **dadurch gekennzeichnet, dass** über ein von dem Antrieb (14) betätigbares Getriebe und das gemeinsame Antriebsteil (46) mindestens vier Kulissensteuerungen (12) paarweise einander gegenüberliegend antreibbar sind.

5. Formvorrichtung nach einem der Ansprüche 1 bis 4, **dadurch gekennzeichnet, dass** eine Überwachungseinrichtung (50) die Position einer Kulissensteuerung (12) überwacht, zumindest bezogen auf die Position des Formwerkzeuges (10,10a) in seiner Schließstellung.

6. Formvorrichtung nach einem der Ansprüche 1 bis 5, **dadurch gekennzeichnet, dass** die Bahngleichung für die Schlitzführung (24) aus einer Sinoide nach Bestehorn erhalten ist.

7. Formvorrichtung nach einem der Ansprüche 1 bis 6, **dadurch gekennzeichnet, dass** der Antrieb (14) ein Elektromotor, insbesondere ein Schrittmotor, ist.

## Claims

1. A moulding device for moving at least one moulding tool (10, 10a), in particular for generating container geometries of plastic containers by means of a link motion control element (12) which brings the respective moulding tool (10, 10a) into a closing position (I - I), at least for closing the mould, the link motion control element (12) being able to be actuated by a drive (14), and the link motion control element (12) having a slot guide (24) which is located on the outer circumference on a body of rotation (26) that can be driven by the drive (14), and an actuating member (30) engaging in the slot guide (24), which actuating member co-operates with a slide part (32), and upon rotation of the slot guide (24) from its one end region (34) to its other end region (36) and vice versa the assignable slide part (32) with the moulding tool (10, 10a) being able to be moved by the actuating member (30) that can thus be moved longitudinally from a closing position into an opening position of the mould formed from the respective moulding tool (10, 10a) and vice versa, **characterised in that** the maximum closing force for at least one of the moulding tools (10, 10a) can be specified by an adjusting means (44) on the slide part (32) in the form of an energy accumulator.

2. The moulding device according to Claim 1, **characterised in that** the body of rotation (26) together with the drive (14) is mounted, fixed, on a machine frame (18) in relation to which the slide part (32) can be moved back and forth along its rail guide (40).

3. The moulding device according to Claim 1 or 2, **characterised in that** the moulding tools (10, 10a) lying opposite one another can be moved in pairs synchronously by a respective link motion control element (12) by means of a common drive part (46).

4. The moulding device according to Claim 3, **characterised in that** at least four link motion control elements (12) can be driven in pairs lying opposite each other by means of gearing which can be operated by the drive (14) and the common drive part (46).

5. The moulding device according to any of Claims 1 to 4, **characterised in that** a monitoring device (50) monitors the position of a link motion control element (12), at least with respect to the position of the moulding tool (10, 10a) in its closing position.

6. The moulding device according to any of Claims 1 to 5, **characterised in that** the path equation for the slot guide (24) is obtained from a Bestehorn sinoid.

7. The moulding device according to any of Claims 1 to 6, **characterised in that** the drive (14) is an electric motor, in particular a stepping motor.

## Revendications

1. Dispositif de moulage pour le déplacement d'au moins un outil (10, 10a) de moulage, notamment pour la production de géométries de récipient en matière plastique, au moyen d'une commande (12) à coulisse, qui met l'outil (10, 10a) de moulage respectif, au moins pour la fermeture du moule, dans une position (I-I) de fermeture, la commande (12) à coulisse pouvant être actionnée par un entraînement (14) et la commande (12) à coulisse ayant un guidage (24) à fente, qui se trouve du côté du contour extérieur sur un corps (26) de rotation, pouvant être entraîné par l'entraînement (14) et dans lequel pénètre, dans le guidage (24) à fente, un organe (30) d'actionnement, qui coopère avec une partie (32) formant chariot, et dans lequel, lors de la rotation du guidage (24) à fente de l'une de ses zones (34) d'extrémité à l'autre zone (36) d'extrémité et inversement, la partie (32) formant chariot, qui peut être associée, peut, avec l'outil (10, 10a) de moule, être déplacée par l'organe (30) d'actionnement déplaçable longitudinalement d'une position de fermeture à une position d'ouverture du moule formé par l'outil (10, 10a) respectif de moulage et inversement, **caractérisé en ce que** la force maximum de fermeture d'au moins l'un des outils (10, 10a) de moulage peut être donnée à l'avance par un moyen (44) de réglage sur la partie (32) formant chariot sous la forme d'un accumulateur d'énergie.

2. Dispositif de moulage suivant la revendication 1, **caractérisé en ce que** le corps (26) de rotation est monté ensemble avec l'entraînement (14) à poste fixe sur un bâti (18) de machine, par rapport auquel la partie (32) formant chariot peut être déplacée en aller et retour le long de son guidage (40) par rail.

3. Dispositif de moulage suivant la revendication 1 ou 2, **caractérisé en ce que**, paire par paire, les outils (10, 10a) de moulage, en face respectivement d'une commande (12) à coulisse, peuvent être déplacés en synchronisme par une partie (46) d'entraînement conjointe.

4. Dispositif de moulage suivant la revendication 3, **caractérisé en ce que** quatre commandes (12) de coulisse peuvent être entraînées en face l'une de l'autre, paire par paire, par une transmission pouvant être actionnée par l'entraînement (14) et par la partie (46) d'entraînement conjointe.

5. Dispositif de moulage suivant l'une des revendications 1 à 4, **caractérisé en ce qu'**un dispositif (50) de contrôle contrôle la position d'une commande (12) à coulisse, au moins rapporté à la position de l'outil (10, 10a) de moulage dans sa position de fermeture.

6. Dispositif de moulage suivant l'une des revendications 1 à 5, **caractérisé en ce que** l'équation de trajectoire du guidage (24) par fente est obtenue à partir d'une sinoïde de Bestehorm.

7. Dispositif de moulage suivant l'une des revendications 1 à 6, **caractérisé en ce que** l'entraînement (14) est un moteur électrique, notamment un moteur pas à pas.
